# FASCICULE DE BREVET EUROPEEN

(11) **EP 0 604 320 B1**
(45) Date de publication et mention de la délivrance du brevet: **12.03.1997**
(21) Numéro de dépôt: 93403159.2
(22) Date de dépôt: 23.12.1993
(51) Int. Cl.: B60K 15/035, B01D 53/04, F02M 25/08, B60K 15/04

(54) **Agencement pour le remplissage d'un réservoir associé à un dispositif de filtration des vapeurs de carburant**
Anordnung zum Füllen eines Behälters mit einer Kraftstoffdampffiltervorrichtung
Tank filling arrangement associated with a device for the filtration of fuel vapor

(30) Priorité: 23.12.1992 FR 9215640; 22.07.1993 FR 9309039
(43) Date de publication de la demande: 29.06.1994
(73) Titulaire: PAUL JOURNEE S.A., F-92700 Colombes (FR)
(72) Inventeur: Journée, Maurice, F-60240 Reilly (FR); Romanek, Christian, F-60430 Noailles (FR); Bru, Jean-Raymond, F-60000 Beauvais (FR); Crepin, Christophe, F-95300 Pontoise (FR)
(74) Mandataire: Lemaire, Marc

(56) Documents cités:
- EP-A- 0 245 613
- WO-A-88/09694
- WO-A-92/20406
- DE-A- 3 709 424
- DE-A- 3 842 994
- DE-C- 3 209 007
- DE-U- 8 902 960
- DE-U- 9 210 525
- US-A- 3 748 829
- US-A- 4 381 929
- US-A- 4 572 394
- US-A- 4 732 588

## Description

La présente invention concerne un agencement pour le remplissage d'un réservoir de carburant de véhicule automobile.

L'invention propose plus particulièrement un agencement pour le remplissage d'un réservoir de carburant de véhicule automobile, du type comportant une tubulure de remplissage dont l'orifice de remplissage est disposé dans une zone du véhicule accessible à un utilisateur, et du type dans lequel le véhicule comporte un dispositif de filtration comprenant un boîtier qui contient une cartouche d'élément filtrant pouvant être remplacée, et qui est équipé d'une tête de raccordement amovible comportant au moins un orifice d'introduction de gaz et un orifice d'évacuation de gaz.

On connaît de nombreux agencements de ce type dans lesquels la tubulure de remplissage se termine à sa partie supérieure par une tête de remplissage qui débouche à la partie arrière du véhicule, par exemple au niveau d'une aile latérale arrière, et qui est équipée d'un dispositif de fermeture lui-même accessible par une trappe de la carrosserie.

Cet agencement est particulièrement avantageux dans la mesure où le réservoir de carburant est lui-même agencé à la partie arrière du véhicule, généralement entre le plancher et les sièges arrières, et il permet de réduire la longueur de la tubulure de remplissage.

Le réservoir de carburant est équipé d'un conduit de mise à l'air libre qui débouche dans un dispositif de filtration des vapeurs de carburant qu'il est nécessaire d'aménager dans le véhicule et qui, conformément aux enseignements de l'invention, peut comporter une cartouche de filtration qui doit être remplacée régulièrement.

Un dispositif de filtration de ce type, également appelé "canister", a pour but d'absorber les vapeurs d'essence afin de supprimer les rejets dans l'atmosphère d'hydrocarbures dus aux pertes par évaporation qui se produisent notamment à la partie supérieure du réservoir de carburant du véhicule.

Cet accessoire nécessite donc également d'être agencé dans une zone relativement accessible du véhicule afin de ne pas compliquer exagérément les opérations nécessaires au remplacement de la cartouche de filtration, ainsi que le au contrôle de son état de colmatage.

Le canister récupère et assure un stockage transitoire des vapeurs d'essence s'échappant du réservoir.

On connaît une conception d'un tel type de dispositif de filtration comportant un boîtier qui contient un élément filtrant et qui est équipé d'une tête de raccordement comportant au moins un orifice d'introduction des gaz et un orifice d'évacuation des gaz.

Au fur et à mesure de son utilisation, et en fonction du degré de colmatage et d'usure de l'élément filtrant, le canister perd progressivement de son efficacité.

Ce type de canister réalisé sous la forme d'un élément "monté à vie" sur le véhicule n'est donc pas satisfaisant dans la mesure où il ne participe plus suffisamment efficacement à la dépollution et à la récupération des vapeurs de carburant au fur et à mesure du vieillissement du véhicule.

Le document US-A-3.748.829 décrit un canister amovible fixé à l'extrémité supérieure de la tubulure de remplissage, coaxialement à celle-ci. Le canister a une forme tubulaire de manière à laisser un passage pour le pistolet de remplissage. Avec une telle disposition, la taille du canister est limitée.

Il a été proposé dans le document US-A-4.381.929 un dispositif de récupération de vapeurs de carburant utilisant une cartouche amovible de filtration.

Toutefois, le dispositif proposé ne permet pas un montage facile de la cartouche qui garantisse simultanément une bonne étanchéité de la liaison entre la cartouche et la tête de raccordement. Un tel dispositif est conçu pour que le remplacement de la cartouche soit assuré par une personne spécialisée, par exemple par un garagiste au cours d'une visite d'entretien du véhicule.

De plus, il n'est pas prévu de moyens de détection de l'état de colmatage de la cartouche, ce qui peut conduire à un remplacement tardif ou prématuré de la cartouche.

Par ailleurs, un tel dispositif doit être agencé de manière à être aisément accessible pour pouvoir effectuer les opérations de maintenance qui viennent d'être décrites. Cet agencement doit pouvoir être réalisé sans surcoût excessif doit pouvoir être monté de manière simple sur le véhicule.

L'invention a pour but de proposer un agencement qui permet de résoudre de manière simple et économique les problèmes qui viennent d'être mentionnés.

Dans ce but, l'invention propose un agencement du type vu précédemment, et comportant notamment les caractéristiques du dispositif de filtration décrit dans le document US-A-4.381.929, caractérisé en ce que le dispositif de filtration est agencé sensiblement parallèlement à la tubulure de remplissage et est relié ou fixé à celle-ci, la tête de raccordement étant agencée à proximité de l'orifice de remplissage, dans ladite zone du véhicule, de manière à être accessible pour l'utilisateur.

Selon d'autres caractéristiques de l'invention :
- l'orifice de remplissage et la tête de raccordement comportent chacun des moyens d'obturation ;
- la tubulure de remplissage et le boîtier du dispositif de filtration sont réalisés venus de matière en une seule pièce ;
- la tubulure de remplissage et le boîtier sont réalisés par injection-soufflage de matière plastique ;
- le dispositif de filtration comporte un boîtier, en ce que la cartouche comporte notamment une paroi latérale et une face supérieure ouverte, et la paroi latérale de la cartouche forme la paroi latérale du boîtier ;
- le dispositif de filtration comporte un boîtier, la cartouche du dispositif de filtration comporte notamment une paroi latérale, une face supérieure ouverte, et un fond, et un ressort de compression est interposé entre le fond du boîtier et le fond de la cartouche ;
- le fond du boîtier est fixé de manière amovible sur l'extrémité inférieure de la paroi latérale de la cartouche ;
- le fond du boîtier est fixé de manière amovible sur l'extrémité inférieure de la paroi latérale du boîtier ;
- le fond du boîtier comporte des moyens de décantation ;
- la paroi latérale de l'enveloppe de la cartouche comporte des moyens d'indication visuelle du niveau de colmatage et/ou d'usure de la cartouche ;
- la paroi latérale du boîtier comporte une fenêtre agencée en regard des moyens d'indication ;
- le boîtier comporte des moyens d'obturation de l'orifice d'accès à la cartouche qui comportent des moyens d'indication d'un niveau de colmatage de la cartouche ;
- le boîtier comporte des moyens de préchauffage de l'élément filtrant ; et
- les moyens de préchauffage sont des fils conducteurs chauffants intégrés à la paroi latérale du boîtier.

D'autres caractéristiques et avantages de l'invention apparaîtront à la lecture de la description détaillée qui va suivre pour la compréhension de laquelle on se reportera aux dessins annexés dans lesquels :
- La figure 1 est une est une vue en section axiale d'un canister utilisé dans l'agencement selon l'invention ;
- la figure 2 est une vue en perspective éclatée avec arrachement partiel d'un second canister utilisé dans l'agencement selon l'invention;
- la figure 3 est une vue en perspective qui illustre un mode de réalisation d'un agencement pour le remplissage d'un réservoir comprenant une tubulure de remplissage à laquelle est associé un dispositif de filtration des vapeurs de carburant ;
- la figure 4 est une vue schématique en perspective illustrant une trappe d'accès pour le remplissage du réservoir de carburant et le remplacement de la cartouche de filtration du dispositif illustré à la figure 3.

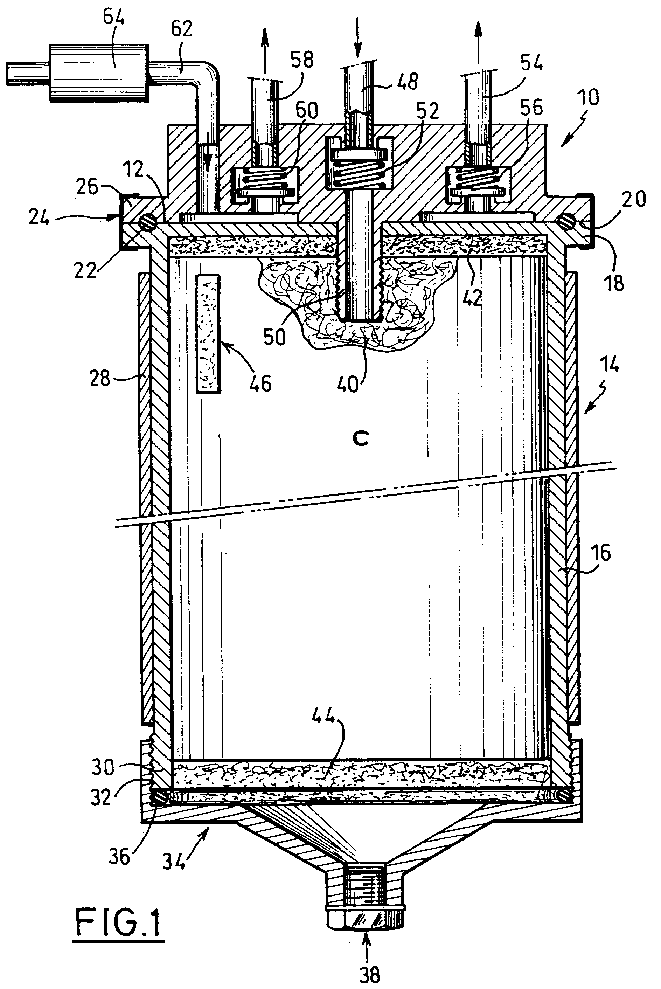

Le dispositif de filtration, ou canister, illustré sur la figure 1 comporte une tête de raccordement 10 qui est montée et fixée de manière étanche sur la face supérieure ouverte 12 d'une partie inférieure 14 en forme de boîtier.

La tête de raccordement 10 et le boîtier 14 sont de forme générale cylindrique d'axe vertical en considérant la figure 1.

Le boîtier 14 est partiellement constitué par une cartouche d'élément filtrant du canister qui comporte une paroi latérale cylindrique 16 dont l'extrémité supérieure est munie d'un collet radial 18 dont la face supérieure ouverte 12 est en appui contre la face inférieure 20 de la tête de raccordement 10.

Un joint torique d'étanchéité 22 est interposé entre ces deux faces en appui et la fixation de la tête de raccordement 10 sur le boîtier 14 est assurée au moyen d'un collier de serrage latéral 24 qui enserre le collet - radial 18 de l'enveloppe 16 et un collet complémentaire 26 formé à la partie inférieure de la tête de raccordement 10.

L'enveloppe 16 en forme de jupe cylindrique de la cartouche C est entourée par une chemise chauffante 28 permettant d'assurer un préchauffage de l'élément filtrant contenu dans la cartouche C.

L'extrémité inférieure 30 de l'enveloppe 16 de la cartouche C comporte un filetage 32 permettant la fixation par vissage d'un fond 34 du boîtier avec interposition d'un joint torique d'étanchéité 36.

Le fond 34 est conformé de manière conique pour assurer une fonction de décantation du carburant liquide contenu dans la cartouche C et il comporte une vis de purge 38.

La cartouche C contient une masse d'élément filtrant 40 qui est par exemple un charbon actif et, à ses extrémités supérieure et inférieure, deux couches de mousse 42 et 44.

On a également illustré de manière schématique à la figure 1 un témoin visuel 46 qui permet d'indiquer le niveau de colmatage et d'usure de l'élément filtrant 40 contenu dans la cartouche C.

La tête de raccordement 10 comporte un orifice relié à une conduite 48 d'introduction des gaz chargés de vapeurs d'hydrocarbures qui est relié à un embout 50 qui pénètre dans le matériau filtrant 40 de la cartouche C avec interposition d'un clapet 52.

La tête de raccordement 10 comporte également un orifice d'évacuation des vapeurs reliés à une conduite d'évacuation 54 avec interposition d'un clapet 56.

La ventilation de la cartouche d'élément filtrant C est assurée par deux agencements de mise à l'air libre.

Un premier agencement de mise à l'air libre, du canister en direction de l'extérieur, est constitué par une conduite 58 et un clapet 60.

Le second dispositif de mise à l'air libre, depuis l'extérieur vers l'intérieur du canister, est constitué par une conduite 62 dans laquelle peut être agencé un dispositif 64 de filtration destiné à protéger le charbon actif de la cartouche C de toute pénétration d'humidité.

Les différents orifices et passages formés dans la tête d'entraînement débouchent tous dans sa face inférieure 20 au-dessus de la face supérieure de la couche de mousse 42 de la cartouche C, ou, dans le cas de l'embout 50, directement à l'intérieur du matériau filtrant 40.

Selon un principe connu, le canister illustré à la figure 1 fonctionne de la manière suivante.

Lors d'une première phase, et quand le moteur est à l'arrêt, les molécules d'hydrocarbures sont adsorbées par le charbon actif.

L'adsorption est un phénomène physique réversible qui consiste en un accrochage des gaz sur des surfaces solides selon le principe des forces de Van Der Waal. Lorsque le moteur fonctionne, la dépression dans le circuit provoque la "désorption", c'est-à-dire le "décrochage" des molécules de gaz des surfaces du charbon actif et leur évacuation du canister en vue de leur injection dans le circuit d'alimentation du moteur.

La réalisation d'une cartouche extractible d'élément actif permet, parmi de nombreux avantages, de procéder à des cycles de régénération de l'élément actif qu'elle contient en vue de sa réutilisation.

La présence d'un témoin de colmatage, également appelé témoin de saturation, qui peut par exemple être réalisé sous la forme d'un papier réactif, révèle une perte d'efficacité importante du charbon actif et signale à l'utilisateur la nécessité de procéder au remplacement de la cartouche.

Il peut s'agir d'un capteur d'hydrocarbures qui, placé dans la cartouche, détecte un seuil de concentration des hydrocarbures que le charbon actif ne parvient plus à restituer après adsorption, rendant ainsi la désorption inefficace.

La possibilité d'aménager un système de préchauffage de l'élément filtrant favorise l'adsorption des hydrocarbures à la surface du charbon actif.

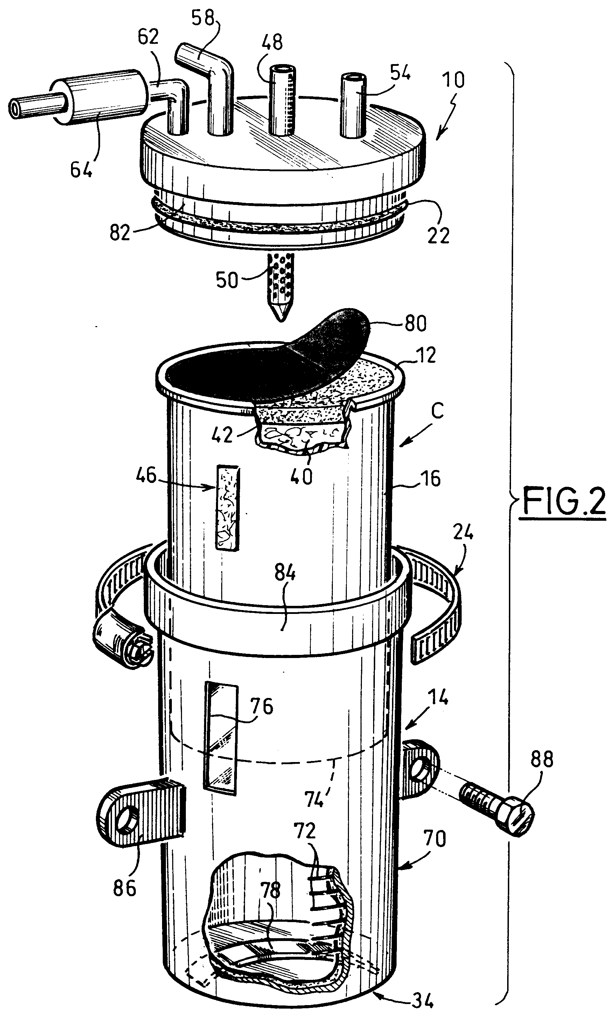

On décrira maintenant le canister illustré à la figure 2 sur laquelle des composants identiques ou similaires à ceux du mode de réalisation illustré à la figure 1 sont désignés par les mêmes chiffres de référence.

Comme on peut le constater sur la figure 2, le boîtier 14 est réalisé sous la forme d'un boîtier métallique autonome qui comporte sa propre enveloppe 70 dans l'épaisseur de laquelle sont agencés des fils conducteurs chauffants 72.

La cartouche d'élément filtrant C comporte également sa propre enveloppe constituée par sa paroi latérale 16 et par un fond fermé 74.

La paroi latérale 70 du boîtier 14 comporte une fenêtre 76 pour permettre de voir le témoin de colmatage 46 lorsque la cartouche est en position dans le boîtier 14.

Un ressort de compression 78 est agencé à l'intérieur du boîtier 14 entre le fond 34 de ce dernier et le fond 74 de la cartouche C.

Comme cela est illustré sur la figure 2, la face supérieure ouverte 12 de la cartouche C peut initialement être fermée par un opercule de protection 80.

Le joint torique d'étanchéité 22 est ici agencé dans une gorge formée dans une portion de paroi latérale cylindrique 82 de la partie inférieure de la tête de raccordement 10 qui est reçue de manière étanche à l'intérieur de la partie supérieure cylindrique complémentaire 84 de la paroi latérale 70 du boîtier 14.

La fermeture étanche de l'ensemble et la fixation de la tête de raccordement 10 sur le boîtier 14 peut être assurée au moyen d'un collier de serrage 24.

Dans ce canister, la cartouche constitue un élément autonome complet dont le corps ou enveloppe assure uniquement le conditionnement du charbon actif 40 contenu dans la cartouche C. Cette enveloppe n'est soumise à aucune exigence concernant sa perméabilité.

La fixation du canister sur une partie de la structure du véhicule automobile (non représentée) peut être assurée par différents moyens de fixation tels que par exemple les pattes 86 et vis 88 illustrées sur la figure, le boîtier 14, qui est par exemple métallique, possédant à cet effet une rigidité suffisante.

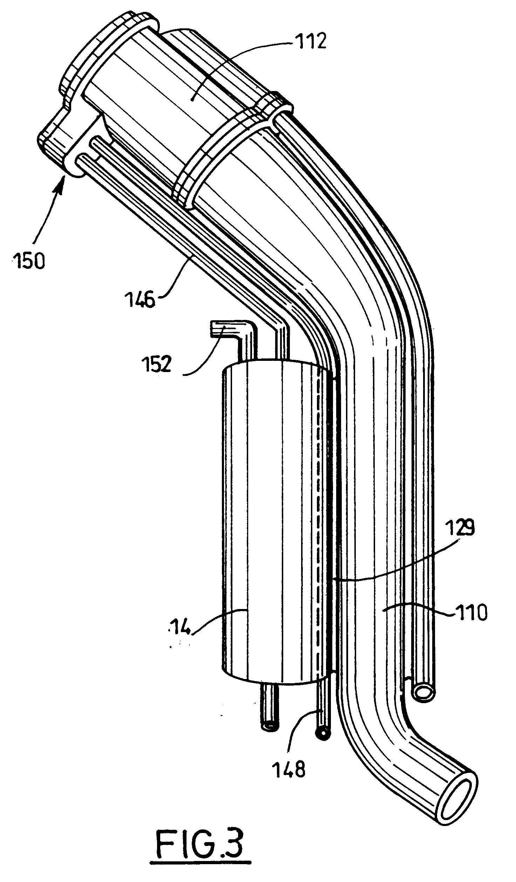

On reconnaît sur la figure 3 une tubulure 110 de remplissage d'un réservoir de carburant (non représenté) réalisée en matière plastique par la technique d'injection-soufflage.

La tubulure 110 se termine à sa partie supérieure par une pipe de remplissage 112 dont le bord libre 114 peut par exemple être réalisé avec un filetage extérieur (non représenté) pour recevoir un bouchon de fermeture.

Le boîtier 14 et la tubulure de remplissage 110 sont réalisés venus de matière en un seul élément, par exemple par la technique d'injection-soufflage, et sont reliés entre eux par une nervure 129.

L'admission des gaz chargés de vapeurs de carburant dans le boîtier 14 se fait par une conduite supérieure 146 qui est reliée à la conduite principale 148 de mise à l'air libre de la partie supérieure du réservoir de carburant par un dispositif, qui n'est pas illustré en détail à la figure 3, qui peut comporter notamment un clapet, commandé par le bouchon de fermeture de la pile de remplissage 112, qui interrompt la communication entre les conduites 146 et 148.

L'évacuation des gaz filtrés peut se faire par une conduite de sortie 152 agencée à la partie supérieure du boîtier 14.

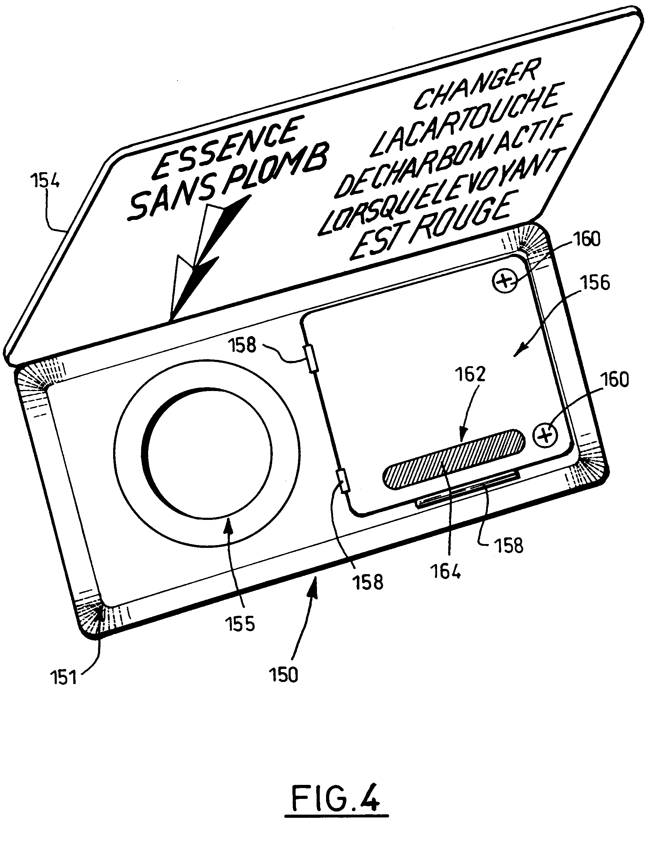

Sur le schéma de la figure 4, on a représenté une partie 150 de la carrosserie du véhicule automobile, par exemple agencée dans l'aile latérale arrière droite du véhicule qui peut être fermée par une trappe d'accès articulée 154.

La zone 151 permet l'accès à un bouchon 155 de remplissage du réservoir de carburant, qui est vissé sur l'extrémité filetée 114 de la pipe 112 de la tubulure de remplissage 110.

La zone 151 comporte également un volet 156 qui est illustré en position fermée, et qui permet d'une part l'accès à la partie supérieure du boîtier 14 contenant une cartouche d'élément filtrant, et d'autre part la vérification du niveau d'usure ou de colmatage de la cartouche de l'élément filtrant.

A cet effet, le volet 156 comporte des pattes de fixation 158 et des pênes de verrouillage commandés par des vis quart de tour 160, ainsi qu'une fenêtre 162 agencée en regard d'un témoin 164 de colmatage de la cartouche d'éléments de filtration.

La zone d'accès 151, en coopération avec le volet 156 peut également délimiter une fente 158 pour l'évacuation des gaz filtrés.

L'utilisateur peut donc, par exemple lors de chaque remplissage de son réservoir, vérifier par la fenêtre 162 l'état de colmatage de la cartouche de filtration et procéder à son remplacement par exemple lorsque le voyant 164 est rouge comme cela est indiqué sur la face intérieure de la trappe 154.

## Revendications

1. Agencement pour le remplissage d'un réservoir de carburant de véhicule automobile, du type comportant une tubulure de remplissage (110) dont l'orifice de remplissage (114) est disposé dans une zone du véhicule accessible à un utilisateur, et du type dans lequel le véhicule comporte un dispositif de filtration comprenant un boîtier (14) qui contient une cartouche (C) d'élément filtrant (40) pouvant être remplacée, et qui est équipé d'une tête de raccordement (10) amovible permettant l'accès à la cartouche (C) en vue de son remplacement, cette tête (10) comportant au moins un orifice d'introduction de gaz (58) et un orifice d'évacuation de gaz (48),
caractérisé en ce que le dispositif de filtration est agencé sensiblement parallèlement et non coaxialement à la tubulure de remplissage (110) et est relié ou fixé à celle-ci (110), la tête de raccordement (10) étant agencée à proximité de l'orifice de remplissage, dans ladite zone du véhicule, de manière à être accessible pour l'utilisateur.

2. Agencement selon la revendication 1, caractérisé en ce que l'orifice de remplissage (114) et la tête de raccordement (10) comportent chacun des moyens d'obturation.

3. Agencement selon l'une quelconque des revendications précédentes, caractérisé en ce que la tubulure de remplissage (110) et le boîtier (14) du dispositif de filtration sont réalisés venus de matière en une seule pièce.

4. Agencement selon la revendication 3, caractérisé en ce que la tubulure de remplissage (110) et le boîtier (14) sont réalisés par injection-soufflage de matière plastique.

5. Agencement selon l'une quelconque des revendications précédentes, caractérisé en ce que la cartouche (C) comporte notamment une paroi latérale (16) et une face supérieure ouverte (12), et en ce que la paroi latérale de la cartouche forme la paroi latérale du boîtier.

6. Agencement selon l'une quelconque des revendications 1 à 4, caractérisé en ce que la cartouche (C) du dispositif de filtration comporte notamment une paroi latérale (16), une face supérieure ouverte (12), et un fond (74), et en ce qu'un ressort de compression est interposé entre le fond (34) du boîtier (14) et le fond (74) de la cartouche (C).

7. Agencement selon la revendication 5, caractérisé en ce que le fond (34) du boîtier (14) est fixé de manière amovible sur l'extrémité inférieure de la paroi latérale de la cartouche (C)

8. Agencement selon la revendication 6, caractérisé en ce que le fond (34) du boîtier (14) est fixé de manière amovible sur l'extrémité inférieure (30) de la paroi latérale du boîtier.

9. Agencement selon l'une des revendications 7 ou 8, caractérisé en ce que le fond (34) du boîtier comporte des moyens de décantation.

10. Agencement selon l'une quelconque des revendication 5 à 9, caractérisé en ce que la paroi latérale de l'enveloppe de la cartouche (C) comporte des moyens (46) d'indication visuelle du niveau de colmatage et/ou d'usure de la cartouche.

11. Agencement selon la revendication 10 prise en combinaison avec la revendication 6, caractérisé en ce que la paroi latérale du boîtier comporte une fenêtre (76) agencée en regard des moyens d'indication (46).

12. Agencement selon l'une quelconque des revendications 5 à 9, caractérisé en ce que le boîtier (14) comporte des moyens d'obturation de l'orifice d'accès à la cartouche (C) qui comportent des moyens d'indication (64) d'un niveau de colmatage de la cartouche.

13. Agencement selon l'une quelconque des revendications 4 à 12, caractérisé en ce que le boîtier (14) comporte des moyens (28, 72) de préchauffage de l'élément filtrant.

14. Agencement selon la revendication 13, caractérisé en ce que les moyens de préchauffage sont des fils conducteurs chauffants (72) intégrés à la paroi latérale (70) du boîtier (14).

## Claims

1. Arrangement for filling a motor vehicle fuel tank, of the type having a filler pipe (110) whose filling orifice (114) is disposed in an area of the vehicle which is accessible to a user, and of the type in which the vehicle has a filtration device comprising a housing (14) which contains a cartridge (C) with a filter element (40) which can be replaced, and which is equipped with a removable connection head (10) allowing access to the cartridge (C) with a view to its replacement, this head (10) having at least one gas inlet orifice (58) and one gas discharge orifice (48),
characterised in that the filtration device is arranged substantially parallel to and non-coaxially with the filler pipe (110) and is connected or fixed to the latter (110), the connection head (10) being arranged in proximity to the filling orifice, in the said area of the vehicle, so as to be accessible to the user.

2. Arrangement according to Claim 1, characterised in that the filling orifice (114) and the connection head (10) each include closure means.

3. Arrangement according to any one of the preceding claims, characterised in that the filler pipe (110) and the housing (14) of the filtration device are produced in one piece from the same material.

4. Arrangement according to Claim 3, characterised in that the filler pipe (110) and the housing (14) are produced by plastic injection/blow moulding.

5. Arrangement according to any one of the preceding claims, characterised in that the cartridge (C) has notably a side wall (16) and an open top face (12), and in that the side wall of the cartridge forms the side wall of the housing.

6. Arrangement according to any one of Claims 1 to 4, characterised in that the cartridge (C) of the filtration device has notably a side wall (16), an open top face (12) and a base (74), and in that a compression spring is interposed between the base (34) of the housing (14) and the base (74) of the cartridge (C).

7. Arrangement according to Claim 5, characterised in that the base (34) of the housing (14) is removably fixed to the bottom end of the side wall of the cartridge (C).

8. Arrangement according to Claim 6, characterised in that the base (34) of the housing (14) is removably fixed to the bottom end (30) of the side wall of the housing.

9. Arrangement according to Claims 7 or 8, characterised in that the base (34) of the housing includes decantation means.

10. Arrangement according to any one of Claims 5 to 9, characterised in that the side wall of the casing of the cartridge (C) includes means (46) of visual indication of the level of blockage and/or wear of the cartridge.

11. Arrangement according to Claim 10 taken in combination with Claim 6, characterised in that the side wall of the housing includes a window (76) arranged opposite the indication means (46).

12. Arrangement according to any one of Claims 5 to 9, characterised in that the housing (14) has means of closing off the access orifice to the cartridge (C) which include means (64) of indicating the level of blockage of the cartridge.

13. Arrangement according to any one of Claims 4 to 12, characterised in that the housing (14) includes means (28, 72) of preheating the filter element.

14. Arrangement according to Claim 13, characterised in that the preheating means are conductive heating wires (72) integrated in the side wall (70) of the housing (14).

## Patentansprüche

1. Anordnung zur Befüllung eines Kraftstoffbehälters von Kraftfahrzeugen in der Ausführung mit einem Einfüllstutzen (110), dessen Einfüllöffnung (114) in einem für einen Benutzer zugänglichen Bereich des Fahrzeugs angeordnet ist, wobei das Fahrzeug eine Filtervorrichtung mit einem Gehäuse (14) umfaßt, das einen auswechselbaren Einsatz (C) mit einem Filterelement (40) enthält und das mit einem abnehmbaren Anschlußkopf (10) für den Zugang zum Filtereinsatz (C) im Hinblick auf seine Auswechslung versehen ist, wobei dieser Anschlußkopf (10) wenigstens eine Gaseinlaßöffnung (58) und eine Gasauslaßöffnung (48) enthält, **dadurch gekennzeichnet**, daß die Filtervorrichtung in etwa parallel und nicht koaxial zum Einfüllstutzen (110) angeordnet und mit diesem verbunden oder daran (110) befestigt ist, wobei der Anschlußkopf (10) in der Nähe der Einfüllöffnung in dem besagten Bereich des Fahrzeugs angeordnet ist, so daß er für den Benutzer zugänglich ist.

2. Anordnung nach Anspruch 1, **dadurch gekennzeichnet,** daß die Einfüllöffnung (114) und der Anschlußkopf (10) jeweils Verschlußmittel umfassen.

3. Anordnung nach einem der vorangehenden Ansprüche, **dadurch gekennzeichnet,** daß der Einfüllstutzen (110) und das Gehäuse (14) der Filtervorrichtung einstückig aneinander angeformt sind.

4. Anordnung nach Anspruch 3, **dadurch gekennzeichnet,** daß der Einfüllstutzen (110) und das Gehäuse (14) durch Spritzblasen aus Kunststoff ausgeführt sind.

5. Anordnung nach einem der vorangehenden Ansprüche, **dadurch gekennzeichnet,** daß der Filtereinsatz (C) insbesondere eine Seitenwand (16) und eine offene Oberseite (12) aufweist und daß die Seitenwand des Filtereinsatzes die Seitenwand des Gehäuses bildet.

6. Anordnung nach einem der Ansprüche 1 bis 4, **dadurch gekennzeichnet,** daß der Filtereinsatz (C) der Filtervorrichtung insbesondere eine Seitenwand (16), eine offene Oberseite (12) und einen Boden (74) umfaßt und daß eine Druckfeder zwischen dem Boden (34) des Gehäuses (14) und dem Boden (74) des Filtereinsatzes (C) angeordnet ist.

7. Anordnung nach Anspruch 5, **dadurch gekennzeichnet,** daß der Boden (34) des Gehäuses (14) abnehmbar am unteren Ende der Seitenwand des Filtereinsatzes (C) befestigt ist.

8. Anordnung nach Anspruch 6, **dadurch gekennzeichnet,** daß der Boden (34) des Gehäuses (14) abnehmbar am unteren Ende (30) der Seitenwand des Gehäuses befestigt ist.

9. Anordnung nach einem der Ansprüche 7 oder 8, **dadurch gekennzeichnet,** daß der Boden (34) des Gehäuses Absetzmittel umfaßt.

10. Anordnung nach einem der Ansprüche 5 bis 9, **dadurch gekennzeichnet,** daß die Seitenwand der Ummhüllung des Filtereinsatzes (C) Mittel (46) zur optischen Anzeige des Verstopfungs- und/oder Verschleißgrads des Filtereinsatzes umfaßt.

11. Anordnung nach Anspruch 10 in Kombination mit Anspruch 6, **dadurch gekennzeichnet**, daß die Seitenwand des Gehäuses ein Fenster (76) enthält, das gegenüber den Anzeigemitteln (46) angeordnet ist.

12. Anordnung nach einem der Ansprüche 5 bis 9, **dadurch gekennzeichnet,** daß das Gehäuse (14) Verschlußmittel für die Zugangsöffnung zum Filtereinsatz (C) umfaßt, die Mittel (64) zur Anzeige eines Verstopfungsgrads des Filtereinsatzes enthalten.

13. Anordnung nach einem der Ansprüche 4 bis 12, **dadurch gekennzeichnet,** daß das Gehäuse (14) Mittel (28, 72) zum Vorwärmen des Filterelements umfaßt.

14. Anordnung nach Anspruch 13, **dadurch gekennzeichnet,** daß die Vorwärmmittel aus leitenden Heizdrähten (72) bestehen, die in die Seitenwand (70) des Gehäuses (14) eingelassen sind.
